# EUROPEAN PATENT APPLICATION

(11) **EP 4 557 200 A1**
(43) Date of publication of application: **21.05.2025**
(21) Application number: 23210297.0
(22) Date of filing: 16.11.2023
(51) Int. Cl.: G06Q 20/38, G06F 21/64, G06Q 20/36, H04L 9/00, G06Q 20/06

(54) **SERVICE PROVIDER SYSTEM USED IN AN ELECTRONIC TRANSACTION SYSTEM, REMOTE AUDIT LOG SYSTEM, ELECTRONIC TRANSACTION SYSTEM, METHOD USED IN AN ELECTRONIC TRANSACTION SYSTEM**

(71) Applicant: Giesecke+Devrient advance52 GmbH, 81677 München (DE)
(72) Inventor: HUPEL, Lars, 81677 München (DE)
(74) Representative: Ter Meer Steinmeister & Partner

(57) **Abstract**

The invention relates to a service provider system used in an electronic transaction system, the service provider system comprising a service provider unit configured to manage at least one secure transaction unit and a local audit log unit. The service provider unit is configured for providing event data indicating at least one event related to the service provider unit and/or the at least one secure transaction unit. The local audit log unit is configured for storing the event data, storing hash values of the event data as hashed event data and including the hashed event data in a hash tree, and providing a root hash value of the hash tree to at least one remote audit log system located remote from the service provider system.

## Description

The invention relates to a service provider system used in an electronic transaction system. The invention also refers to a remote audit log system. The invention also relates to an electronic transaction system. The invention also relates to a method used in an electronic transaction system.

In electronic transaction systems there are electronic transactions provided. Electronic transactions, such as electronic payment transactions, can be made on an account-based model or a token-based model. A transaction in the account-based model triggers nodes to decrement the balance of the payer's account and increment the balance of the payee's account. Alternatively, in a token-based model, tokens are directly (or indirectly) transferred between payer and payee, e.g. using electronic wallets etc.. Both models are applicable within this disclosure.

Tokens - also referred to as digital assets, electronic coins, coin data sets - may represent any digital asset, in particular a digital currency, preferably a central bank digital currency, short CBDC. These tokens are issued and deleted by an issuing unit of a token transaction system, such as an issuing authority, or a central bank unit or a commercial bank unit, hereinafter also referred to as secure token issuing unit.

There are different technical approaches for exchanging electronic tokens such as a digital asset e.g., digital currency such as CBDC, issued by a central bank within the electronic tokens transaction system.

Electronic token transactions and/or storage of tokens and any associated transaction data and/or storage data in an electronic transaction system must be safe, secure, and so, means for protecting confidentiality, privacy, integrity, and availability of exchanged and/or stored token data must be implemented. This is especially true for electronic payment transactions and associated payment transactions and payment storages in which a monetary value is linked with each token.

In conventional electronic transaction systems, a plurality of regulations and rules provided by national or international authorities like government, central bank or bank supervision exist. The compliance with the rules is checked regularly or if non-compliance is suspected. During a normal proceeding of an electronic transaction system all executed processes, actions or events are logged, in particular logged in a data logger, by the provider of the electronic transaction system, e.g. a bank. Since the logged data are locally stored, i.e. at each provider of the electronic transaction system, manipulation of these data can occur intentionally or accidentally. Therefore, during checking proceedings with respect to the compliance with the rules, the checking authority, e.g. a national or international authority, has to receive a high amount of logged data and has to trust that the data provided by the provider of the electronic transaction system are not manipulated, i.e. that the provided data are unchanged. However, the past shows that some find a way to change respectively manipulate these data. Therefore, based on these experiences of the past, there is a need for providing a system and method to the national or international authorities executing checking proceedings, with which the national or international check authorities can receive solely a minor amount of data and can evaluate and check the received data with respect to manipulation provided by the providers of the electronic transaction system by themselves.

The above-identified objectives are solved with the features of the independent patent claims. Further advantageous embodiments are described in the dependent patent claims.

In an aspect of the present invention, there is provided a service provider system used in an electronic transaction system. The service provider system comprises a service provider unit configured to manage at least one secure transaction unit and a local audit log unit. The service provider unit is configured for providing event data indicating at least one event related to the service provider unit and/or the at least one secure transaction unit. The local audit log unit is configured for storing the event data, storing hash values of the event data as hashed event data and including the hashed event data in a hash tree, and providing a root hash value of the hash tree to at least one remote audit log system located remote from the service provider system.

The service provider system may represent any system being used in an electronic transaction system. The service provider system may comprise a service providing unit, at least one secure transaction unit, and a local audit log unit but is not limited thereto. The service provider system may be a central or decentral system but does not comprise a distributed system. For instance, the service provider system may be a financial service provider, FSP, but is not limited thereto.

The service provider unit may represent any unit configured for managing at least one secure transaction unit. The service provider unit is comprised in the service provider system. The service provider unit is further configured for providing event data indicating at least one event related to the service provider unit and/or the at least one secure transaction unit. For instance, the event data are provided by the service provider unit. Specifically, the service provider unit can comprise an event identification unit for identifying at least one event related to the service provider unit and/ or the at least one secure transaction unit, an event data providing unit configured to provide event data for the identified at least one event, and an event data registration unit configured for temporary registering respectively storing the provided event data but is not limited thereto. Alternatively, the event data are provided respectively generated at another unit (not further specified) being different to the service provider unit and being provided respectively transmitted to the service provider unit, i.e. received by the service provider unit. The service provider unit may comprise the at least one secure transaction unit and/or the local audit log unit but is not limited thereto. The service provider unit may comprise a classification unit configured for classifying the event data into at least two event data classes, and/or a result receiving unit configured for receiving a comparison result from a remote audit log system. The classification unit may represent any unit providing a separation of different events into different event classes. Alternatively, each one of the events/event data may include an attribute "event class" indicating the class of the event. The classification may be provided based on the type of the event, the sort/nature of the event, and the participants of the event but is not limited thereto.

The secure transaction unit may represents any secure element, also referred to as secure wallet. The secure element represents any secure token management unit; token wallet; and/or wallet may be used to locally manage token in a secure element itself and/or to modify the tokens and to register the token in the electronic token transaction system. For instance, the secure element represents a participant for the token transaction but is not limited thereto. In alternative approaches, the secure element manages account-specific (account hosted in an FSP) cryptographic keys in order to individualize a transaction that may be based on a sender-id (wallet-id or transaction-unit-id of the sender), a receiver-id (wallet-id or transaction-unit-id of the receiver) and a suitable signature generated with said account-specific cryptographic key. The secure element may be hosted or un-hosted. The secure element may comprise at least one of a means configured for providing a token transaction request to another secure element, a means configured for receiving at least one token from another secure element when performing an offline token transaction between the secure element and the other secure element, a means configured for receiving the history data from the other secure element, a means configured for providing the history data to the special secure element, a means configured for providing a registration request to the special secure element for providing the history data to the token register, and a means configured for receiving a registration response from the token register. The history data may also be used in account-based offline transactions.

The event may represent any result of at least one complete process or action including the service provider unit. Alternatively, the event may represent any result of at least one sub-step of a process or action including the service provider unit. The process may include an exchange process, a transaction process, an issuing process, a deleting process, and/or an execution process but is not limited thereto. For instance, the event may be a token transaction, in which at least one token is transmitted from one secure transaction unit to another secure transaction unit. Therefore, the event may be the successful or not-successful completion of the whole token transaction process or the successful or not-successful completion of a sub-step of the whole token transaction process, e.g. providing of a payment request, but is not limited thereto.

Alternatively or additionally, the at least one event may be a status report automatically logged respectively stored over time, in particular in predefined intervals. The term "status report" may represent any recording of a status of the service provider unit, the status of the process or the status of the sub-processes but is not limited thereto. For instance, the status report may be a change or an occurrence of an event but is not limited thereto. The interval, in particular predefined interval, i.e. defined and set before the providing of the event data, may represent that the status can be logged/stored once a day, once an hour, upon each change of the event, upon each occurrence of an event, upon a specific number of changes of the event, e.g. upon ten changes, or upon a specific number of occurrences of the same event or different events but is not limited thereto.

The event data may be any data indicating the at least one event but is not limited thereto. The event data may be two-dimensional or three-dimensional data but are not limited thereto. The event data may be provided as a string or an integer but is not limited thereto.

The local audit log unit may represent any log unit, in particular any data logger, being configured for storing, i.e. temporarily or permanently storing, the event data, for storing, i.e. temporarily or permanently storing, hash values of the event data as hashed event data and including the hashed event data in a hash tree, and for providing/transmitting a root hash value of the hash tree to at least one remote audit log system but is not limited thereto. The providing of the root hash value of the hash tree to the at least one remote audit log system can be executed periodically or in real time but is not limited thereto. The term "including" represents that the local audit log unit is configured to arrange or structure the hashed event data in respectively into a hash tree. The local audit log unit may comprise at least one storage unit, i.e. memory or cache, for temporarily or permanently storing the event data and the hashed event data. The local audit log unit may further comprise at least one including unit configured for including/arranging/structuring the hashed event data in the hash tree, a determination unit for determining the root hash value of the hash tree, and/or a receiving unit for receiving the root hash value of the hash tree determined by another element of the service provider system. The local audit log unit may comprise a first providing unit configured for providing the root hash value of the hash tree to the at least one remote audit log system but is not limited thereto. Additionally, the local audit log unit may be configured for hashing the event data to generate the hash values of the event data. Therefore, the local audit log unit may include a processor and/or a hashing unit being configured to generate the hash values of the event data. The local audit log unit may further comprise a request receiving unit configured for receiving an audit request, and a second providing unit configured for providing only the specific event data as requested and specific node hashes from the hash tree related to the root hash value and the specific event data to the remote audit log system. The term "local" of the local audit log unit represents that the local audit log unit is included, i.e. is internal, in the service provider system or in the service provider unit.

The audit request may represent any request, any query, or any question for receiving specific event data and the root hash value from the local audit log unit or for providing the specific event data and the root hash value from the local audit log unit to the remote audit log unit. The audit request may further comprise a request, a query, or a question for providing specific node hashes necessary for determining the root hash value from the local audit log unit to the remote audit log system. The term "specific event data" may represent any data being requested for an auditing by the remote audit log system or by another unit. The term "specific node hashes" may represent any node hashes being necessary for determining the root hash of the hash tree based on the specific event data. The audit request may be provided by the remote audit log system but is not limited thereto. Alternatively, the audit request can be provided by another audit requesting unit being external to the electronic transaction system. The other unit may be any national or international authority or agency like the police or the banking supervision but is not limited thereto. The audit request is transmitted from the other audit requesting unit or the remote audit log system directly or indirectly to the local audit log unit. The audit request may be presented as an integer or a string but is not limited thereto.

The hash value of the event data may represent any event data on which a hash function is applied. The hash value may be provided by hashing, i.e. applying a hash function on the event data, e.g. by the local audit log unit, but is not limited thereto. Alternatively, the hash value of the event data can be provided by a hashing unit being comprised in the service provider system and/or the service provider unit and being communicatively coupled to the local audit log unit but is not limited thereto.

The hash tree or Merkle tree may represent a tree in which every "leaf" is labelled with the cryptographic hash of a data block, and every node that is not a leaf is labelled with the cryptographic hash of the labels of its "child" nodes. The top hash value of the hash tree, i.e. the root, is the root hash value.

The remote audit log system may represent any system being configured for auditing the data stored at the local audit log unit. For instance, the remote audit log system may be a data logger but is not limited thereto. The remote audit log system is located remote from the service provider system. The remote audit log system may comprise a first receiving unit configured for receiving at least one root hash value from the service provider system, a storage unit, in particular a memory or a cache, configured for storing, in particular temporarily or permanently storing, the received at least one root hash value, a second receiving unit configured for receiving specific event data and specific node hashes of the hash tree, a determination unit/calculation unit configured for determining a root hash value based on the received specific event data and the specific node hashes of the hash tree, and a comparison unit configured for comparing the determined root hash value with the received root hash value from the service provider system. Further, the remote audit log system may comprise a result providing unit configured for providing a comparison result to the service provider system, a comparison result providing unit configured for providing a comparison result to at least one other unit, and/or a request providing unit configured for providing an audit request to the local audit log unit. Furthermore, the remote audit log system comprises a counting unit configured for counting the receiving of a root hash value from the service provider system; and a counting result providing unit configured for providing the result of the counting to at least one other unit. The term "remote" of the remote audit log system represents that the remote audit log system is not included in, i.e. is outside of or external to, the service provider system.

Alternatively, the term "remote" may represent that the remote audit log system is included in the electronic transaction system. The other unit may be any national or international authority or agency like the police or the banking supervision but is not limited thereto. The other unit may be external to the service provider system.

By using hash values of the event data being arranged respectively included in a hash tree, a minor amount of data has to be provided to the national or international authorities during a check of the compliance with the rules and the national or international check authorities are able to check the data received from the provider of an electronic transaction system with respect to manipulation by themselves. Additionally, it is now possible to identify suspicious secure elements, being secure elements that may perform faulty or fraud transactions, while ensuring that the "privacy" of unsuspicious secure element is preserved.

In a preferred embodiment of the service provider system, the at least one secure transaction unit and/or the local audit log unit are located within the service provider unit.

In a preferred embodiment of the service provider system, the local audit log unit is configured for hashing the event data to generate the hash values of the event data.

In a preferred embodiment of the service provider system, the at least one event is a result of at least one completed process or is a result of at least one sub-step of a process including the service provider unit, wherein the process includes an exchange process, a transaction process, in particular a token transaction, an issuing process, a deleting process, and/or an execution process.

In a preferred embodiment of the service provider system, the at least one event is a status report automatically logged over time, in particular in predefined intervals.

In a preferred embodiment of the service provider system, the local audit log unit comprises at least one storage unit for storing the event data and the hashed event data, at least one including unit configured for including the hashed event data in the hash tree, and a first providing unit configured for providing the root hash value of the hash tree to the at least one remote audit log system.

In a preferred embodiment of the service provider system, the local audit log unit further comprises a request receiving unit configured for receiving an audit request, the audit request requesting specific event data and including the root hash value; a second providing unit configured for providing only the specific event data as requested and specific node hashes from the hash tree related to the root hash value to the remote audit log system.

In a preferred embodiment of the service provider system, the service provider unit further comprises a classification unit configured for classifying the event data into at least two event data classes, and/or a result receiving unit configured for receiving a comparison result from the remote audit log system.

By receiving a comparison result from the remote audit log system, the service provider unit or the service provider system is informed that the event data provided to the remote audit log system are manipulated or not-manipulated and therefore trustable.

In a preferred embodiment of the service provider system, when the service provider system comprises a plurality of secure transaction units, the service provider unit is configured for providing event data for each one of the plurality of secure transaction units; wherein the local audit log unit is configured for: storing the event data for each one of the plurality of secure transaction units; storing a hash value for the event data of each one of the plurality of secure transaction units and including the hashed event data of each one of the plurality of secure transaction units in the same hash tree or is separate hash trees; and providing a root hash value of the same hash tree or the root hash values of each one of the separate hash trees to at least one remote audit log system located remote from the service provider system.

In a preferred embodiment of the service provider system, when the at least one event is a plurality of sub-steps of a process, the service provider unit is configured for providing event data for each one of the sub-steps of the plurality of sub-steps; wherein the local audit log unit is configured for storing the event data for each one of the plurality of sub-steps; storing a hash value for the event data of each one of the plurality of sub-steps and including the hashed event data of each one of the plurality of sub-steps in the same hash tree or in separate hash trees; and providing a root hash value of the same hash tree or the root hash values of each one of the separate hash trees to at least one remote audit log system located remote from the service provider system.

In a preferred embodiment of the service provider system, when the at least one event is a plurality of sub-steps of a process, the service provider unit is configured for providing event data for a number of sub-steps less than the plurality of sub-steps; wherein the local audit log unit is configured for: storing the event data for a number of sub-steps less than the plurality of sub-steps; storing a hash value for a number of sub-steps less than the plurality of sub-steps and including the hashed event data for a number of sub-steps less than the plurality of sub-steps in the same hash tree or in separate hash trees; and providing a root hash value of the same hash tree or the root hash values of each one of the separate hash trees to at least one remote audit log system located remote from the service provider system.

In another aspect of the invention there is provided a remote audit log system comprising a first receiving unit configured for receiving at least one root hash value from the service provider system, a storage unit configured for storing the received at least one root hash value, a second receiving unit configured for receiving specific event data and specific node hashes of the hash tree, a determination unit configured for determining a root hash value based on the received specific event data and the specific node hashes of the hash tree, and a comparison unit configured for comparing the determined root hash value with the received root hash value from the service provider system.

In a preferred embodiment of the remote audit log system, the remote audit log system further comprises a result providing unit configured for providing a comparison result to the service provider system, a comparison result providing unit configured for providing a comparison result to at least one other unit, and/or a request providing unit configured for providing an audit request to the local audit log unit, wherein the audit request requests specific event data and the specific node hashes of the hash tree.

By providing the comparison result to at least one other unit, the remote audit log system is able to directly inform national or international authorities with respect to the result of the comparison of the results, i.e. if the event data were manipulated or not.

In a preferred embodiment of the remote audit log system, the remote audit log system further comprises a counting unit configured for counting the receiving of a root hash value from the service provider system, and a counting result providing unit configured for providing the result of the counting to at least one other unit.

By including a counting unit, the number of an occurrence on an event can be identified and counted. The counted number of the events can be used for estimating the frequency of the occurrence of an event. This estimated frequency can be used e.g. by a licenser to calculate the license fees.

In another aspect of the invention there is provided an electronic transaction system comprising at least one service provider system as described above, and at least one remote audit log system as described above.

In another aspect of the invention there is provided a method used in an electronic transaction system. The method comprises the steps of providing event data indicating at least one event by the service provided unit of the service provider system, providing hashed event data by hashing the received event data by the service provider unit of the service provider system, storing the received event data and the hashed event data in the local audit log unit, including the hashed event data in a hash tree and providing a root hash value of the hash tree by the local audit log unit, providing the root hash value from the local audit log unit to the remote audit log system,

In a preferred embodiment of the method, the method further comprises the steps of providing an audit request to the local audit log unit, receiving by the remote audit log system specific event data and specific node hashes of the hash tree requested in the audit request from the local audit log unit, determining a root hash value based on the received specific event data and specific node hashes by the remote audit log system, and comparing the determined root hash value of the remote audit log system with the received root hash value of the local audit log unit.

In a preferred embodiment of the method, the method further comprises the steps of providing a comparison result from the remote audit log system to the service provider system, and/or providing a comparison result from the remote audit log system to at least one other unit.

In a preferred embodiment of the method, the method further comprises the steps of classifying the event data into at least two event data classes, providing hashed class event data by hashing at least one of the at least two event data classes by the service provider unit of the service provider system, including the hashed class event data in a hash tree and providing a class root hash value of the hashed class event data by the local audit log unit, receiving the class root hash value by the remote audit log system, counting a number of receiving the class root hash value, and providing the counted number of the receiving the class hash value to at last one other unit.

In the following, the invention or further embodiments and advantages of the invention are explained in more detail based on drawings, wherein the drawings describe only embodiments of the invention. Identical components in the drawings are given the same reference signs. Elements drawn with dashed lines are considered as optional elements.

The drawings are not to be regarded as true to scale, and individual elements of the drawings may be shown in exaggeratedly large or exaggeratedly simplified form.
Fig. 1 shows a first exemplary embodiment of the service provider system.
Fig. 2 shows a second exemplary embodiment of the service provider system.
Fig. 3 shows an exemplary embodiment of the remote audit log system.
Fig. 4 shows an exemplary embodiment of an electronic transaction system.
Fig. 5 shows a flow chart of the method used in an electronic transaction system.
Fig. 6 shows a first embodiment of the method used in an electronic transaction system.
Fig. 7 shows a hash tree of the first embodiment of the method used in an electronic transaction system of Fig. 6.
Fig. 8 shows a second embodiment of the method used in an electronic transaction system.
Fig. 9 shows a hash tree of the second embodiment of the method used in an electronic transaction system of Fig. 8.
Fig. 10 shows a third embodiment of the method used in an electronic transaction system.
Fig. 11 shows a hash tree of the third embodiment of the method used in an electronic transaction system of Fig. 10.
Fig. 12 shows a fourth embodiment of the method used in an electronic transaction system.

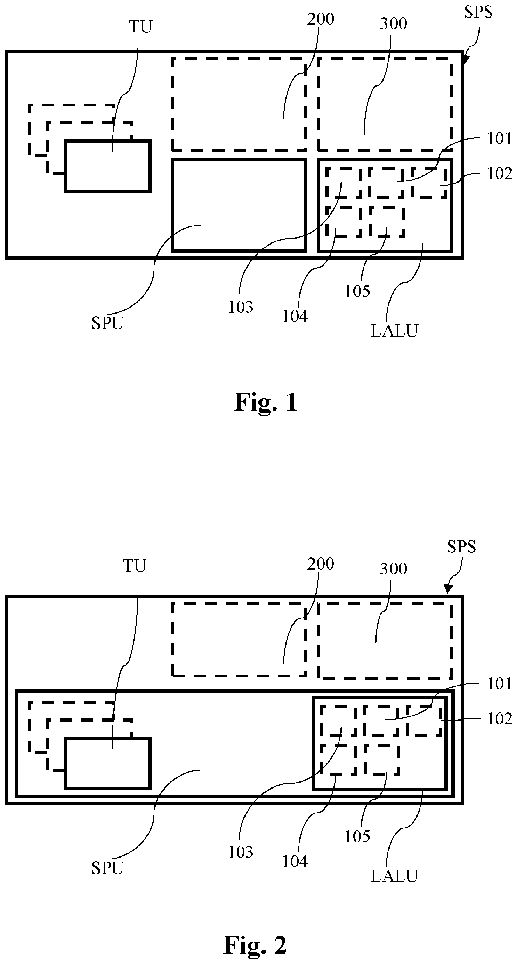

Fig. 1 shows a first exemplary embodiment of the service provider system. The service provider system SPS used in an electronic transaction system TS comprises a service provider unit SPU and at least one secure transaction unit TU. The service provider unit SPU is configured to manage the at least one secure transaction unit TU. The at least one secure transaction unit TU and the service provider unit SPU are directly or indirectly communicatively coupled to each other. The service provider system SPS further comprises a local audit log unit LALU. The local audit log unit is directly or indirectly communicatively coupled to the service provider unit SPU. In the first exemplary embodiment of the service provider system, the at least one secure transaction unit TU, the service provider unit SPU and the local audit log unit LALU are separated from each other within the service provider system SPS.

Optionally, the local audit log unit LALU comprises at least one storage unit 101 for storing the event data and the hashed event data, at least one including unit 102 configured for including the hashed event data in the hash tree, and a first providing unit 103 configured for providing the root hash value of the hash tree to the at least one remote audit log system RALS.

Optionally, the local audit log unit LALU further comprises a request receiving unit 104 configured for receiving an audit request and a second providing unit 105 configured for providing only the specific event data as requested and specific node hashes from the hash tree related to the root hash value to the remote audit log system RALS.

Optionally, the service provider unit SPU further comprises a classification unit 200 configured for classifying the event data into at least two event data classes, and/or a result receiving unit 300 configured for receiving a comparison result from the remote audit log system RALS.

Fig. 2 shows a second exemplary embodiment of the service provider system. The second exemplary embodiment of the service provider system nearly fully corresponds to the first exemplary embodiment of the service provider system as depicted in Fig. 1. However, the second exemplary embodiment of the service provider system differs from the first exemplary embodiment by the fact, that the at least one secure transaction unit TU and the local audit log unit LALU are located within the service provider unit SPU.

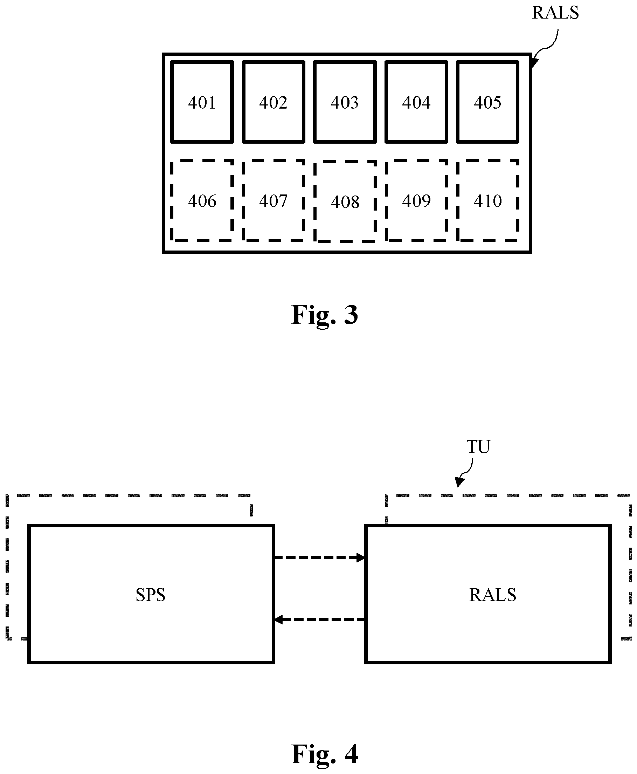

Fig. 3 shows an exemplary embodiment of the remote audit log system. The remote audit log system RALS comprises a first receiving unit 401 configured for receiving at least one root hash value from the service provider system SPS, a storage unit 402 configured for storing the received at least one root hash value, a second receiving unit 403 configured for receiving specific event data and specific node hashes of the hash tree, a determination unit 404 configured for determining a root hash value based on the received specific event data and the specific node hashes of the hash tree, and a comparison unit 405 configured for comparing the determined root hash value with the received root hash value from the service provider system SPS. The unit included in the remote audit log system RALS can be directly or indirectly communicatively coupled to each other.

Optionally, the remote audit log system RALS further comprises a result providing unit 406 configured for providing a comparison result to the service provider system SPS, a comparison result providing unit 407 configured for providing a comparison result to at least one other unit.

Optionally, the remote audit log system RALS further comprises a request providing unit 408 configured for providing an audit request to the local audit log unit LALU. The audit request requests specific event data and the specific node hashes of the hash tree necessary for determining the root hash value.

Optionally, the remote audit log system RALS further comprises a counting unit 409 configured for counting the receiving of a root hash value from the service provider system SPS, and a counting result providing unit 410 configured for providing the result of the counting to at least one other unit.

Fig. 4 shows an exemplary embodiment of an electronic transaction system. The electronic transaction system TU comprises at least one service provider system SPS as described above and at least one remote audit log system RALS as described above. The at least one service provider system SPS and the at least one remote audit log system RALS are directly or indirectly communicatively coupled to each other.

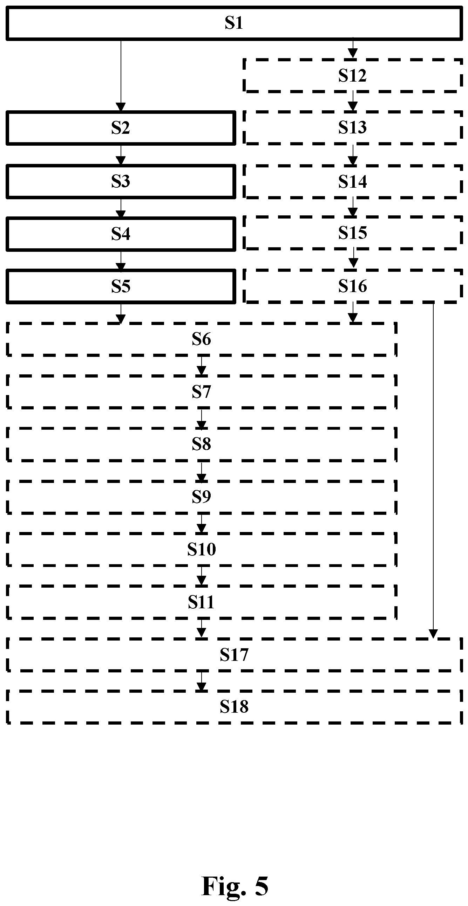

Fig. 5 shows a flow chart of the method used in an electronic transaction system. In a first step S1 of the method, event data indicating at least one event are provided by the service provided unit SPU of the service provider system SPS. In a second step S2 of the method, hashed event data are provided by hashing the received event data by the service provider unit SPU of the service provider system SPS. In a third step S3, the received event data and the hashed event data are stored in the local audit log unit LALU. In a fourth step S4, the hashed event data are included in a hash tree and a root hash value of the hash tree is provided by the local audit log unit LALU. In a fifth step S5, the root hash value is provided respectively transmitted from the local audit log unit LALU to the remote audit log system RALS.

Optionally, in a sixth step S6 of the method, an audit request is provided to the local audit log unit LALU. In a sept step S7, the remote audit log system RALS receives specific event data and specific node hashes of the hash tree requested in the audit request from the local audit log unit LALU. In an eight step S8, a root hash value is determined respectively calculated based on the received specific event data and specific node hashes by the remote audit log system RALS. In a nineth step S9, the determined root hash value of the remote audit log system RALS is compared with the received root hash value of the local audit log unit LALU.

Optionally, in a tenth step S10 of the method, a comparison result is provided respectively transmitted from the remote audit log system RALS to the service provider system SPS.

Optionally, in an eleventh step S11 of the method, a comparison result is provided respectively transmitted from the remote audit log system RALS to at least one other unit, e.g. national or international authority.

Optionally, in a twelfth step S12 of the method, the event data are classified into at least two event data classes. In a thirteenth step S13, the hashed class event data are provided by hashing at least one of the at least two event data classes by the service provider unit SPU of the service provider system SPS. In a fourteenth step S14, the received event data and the hashed class event data are stored in the local audit log unit LALU. In a fifteenth step S15, the hashed class event data are included respectively arranged or structured in a hash tree and a class root hash value of the hashed class event data is provided by the local audit log unit LALU. In a sixteenth step S16, the class root hash value is received by the remote audit log system RALS. In a seventeenth step S17, a number of receiving the class root hash value is counted. In an eighteenth step, the counted number of the receiving the class hash value is provided to at last one other unit.

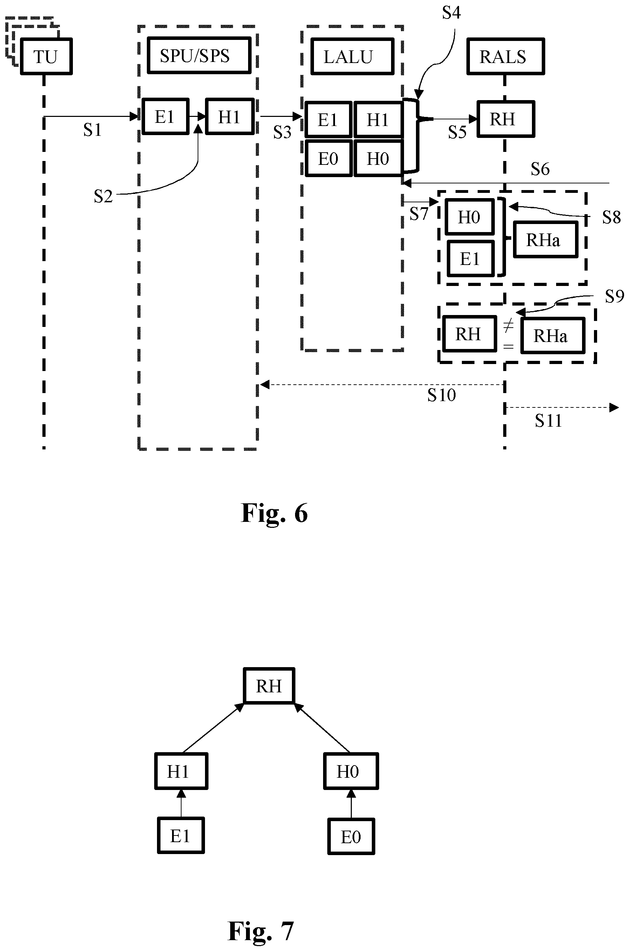

Fig. 6 shows a first embodiment of the method used in an electronic transaction system. In the first embodiment of the method used in an electronic transaction system TS, the service provider unit SPU receives event data E1 form the result of one event, e.g. a complete token transaction process, form one secure transaction unit TU. In this context, both the secure transaction unit and the local audit log unit LALU are not included in the service provider unit SPU. In a first step S1, the service provider unit SPU receives event data E1 form the one secure transaction unit TU, wherein the event data E1 indicate the one event. The event data E1 indicating the one event are hashed such that a hash value H1 of the event data E1 are provided, see second step S2. The hashing of the event data E1 is provided by the service provider unit SPU. The event data E1 and the hash value H1 of the event data E1 are provided from the service provider unit SPU to the local audit log unit LALU and are stored in the local audit log unit LALU, see third step S3. In the local audit log unit LALU, there are stored respectively included also blank values E0 and hashed blank values H0. As depicted in Fig. 7, these blank values E0 and hashed blank values H0 are used respectively needed to fill the hash tree, such that a root hash can be determined in the hash tree. In a fourth step S4, the hash value H1 of the event data E1 are included in a hash tree and a root hash value RH of the hash tree is provided respectively determined. The determination of the root hash value RH is provided by the local audit log unit LALU. After the determination of the root hash value RH, the root hash value RH is transmitted respectively provided from the local audit log unit LALU to the remote audit log system RALS. The remote audit log system RALS is a system being remote, i.e. exterior, from the service provider system.

In case of a desired audit of e.g. the event data E1 stored in the local audit log unit LALU, a audit request is received from the local audit log unit LALU or a audit request is transmitted to the local audit unit LALU, see step S6. In this context, the audit request can be provided from the remote audit log system RALS or form another unit being exterior to the service provider system SPS. In a sept step S7 and as a response to the audit request, the local audit log unit LALU provides respectively transmits specific event data and specific node hashes of the hash tree to the remote audit log system RALS or the remote audit log system RALS receives specific event data and specific node hashes of the hash tree from the local audit log unit LALU. Based on the received specific event data and the specific node hashes, a root hash value RHa is determined respectively calculated. The root hash value RHa is determined respectively calculated by the remote audit log system RALS, see step S8. For instance, when the root hash value of the event data E1, as depicted in Fig. 7, should be determined, the local audit log unit LALU provides as a response to the audit request the specific event data E1 to the remote audit log system RALS. Additionally, the local audit log unit LALU provides respectively transmits complementary specific node hashes, in this example only H0, of the hash tree to the remote audit log system RALS. By receiving both E1 and H0, the remote audit log system RALS is able to determine the root hash RHa. In particular, the remote audit log system RALS is able to determine H1 by hashing the event data E1 and is able to determine the root hash value by determining the hash value of the determined H1 and the received H0. In a nineth step S9, the determined root hash value RHa of the remote audit log system RALS is compared with the root hash value RH being determined by the local audit log unit LALU and being provided respectively transmitted from the local audit log unit LALU to the remote audit log system RALS. The remote audit log system RALS optionally provides a comparison result to the service provider unit SPU or to the service provider system SPS, see the tenth step S10. Further, the remote audit log system RALS optionally provides the comparison result to at least one other unit, see the eleventh step S11.

Alternatively, also depicted in Fig. 6, the service provider unit receives event data form one event, e.g. a complete token transaction process, form a plurality, i.e. at least two, of secure transaction units TU. When the service provider system SPS comprises a plurality of secure transaction units TU, the service provider unit SPU is configured for providing event data E1 for each one of the plurality of secure transaction units TU and for providing hash values H1 for the event data E1 for each one of the plurality of secure transaction units TU. Additionally (not depicted), the service provider system SPS may comprise a plurality of service provider units SPU, wherein each service provider unit SPU is configured for providing event data E1 for one or more secure transaction units TU of the plurality of secure transaction units TU. Further the service provider unit SPU is configured for providing a hash value H1 for the provided event data E1 for one or more secure transaction units TU of the plurality of secure transaction units TU. The local audit log unit LALU is configured in this alternative for storing the event data E1 (received from the one or more service provider units SPU) for each one of the plurality of secure transaction units TU, for storing a hash value H1 (received from the one or more service provider units SPU) of the event data E1 of each one of the plurality of secure transaction units TU and including the hash value H1 of each one of the plurality of secure transaction units TU in the same hash tree or in separate hash trees. The number of hash trees may correspond to the number of secure transaction units TU, but is not limited thereto. The local audit log unit LALU is configured in this alternative for providing a root hash value RH of the same hash tree or a root hash value of each one of the separate hash trees to at the least one remote audit log system RALS.

Fig. 7 shows a hash tree of the first embodiment of the method used in an electronic transaction system of Fig. 6. The hash tree includes the hash value H1 based on the event data E1 and the blank hash value H0 based on the blank data E0. The hash values H1 and H0 are the "leaf" hashes of the hash tree. The root hash RH is provided by hashing the hash value H1 and the blank hash value H0.

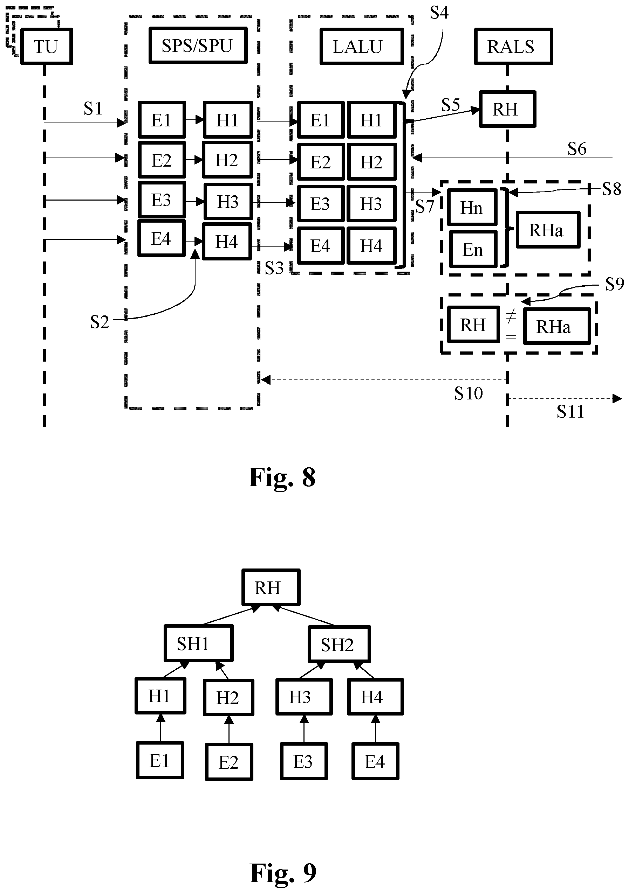

Fig. 8 shows a second embodiment of the method used in an electronic transaction system. In the second embodiment of the method used in an electronic transaction system TS, the service provider unit SPU receives event data E1 to E4 form a plurality of events, e.g. the results of a plurality of sub-steps of a token transaction process, form one secure transaction unit TU. In this context, both the secure transaction unit TU and the local audit log unit LALU are not included in the service provider unit SPU. In a first step S1, the service provider unit SPU receives each of the event data E1 to E4 for each one of the sub-steps form the one secure transaction unit TU. The event data E1 to E4 each indicating one sub-step are respectively hashed such that hash values H1 to H4 of the event data E1 to E4, respectively, are provided, see the second step S2. The hashing of the event data E1 to E4 is provided by the service provider unit SPU. The event data E1 to E4 and the hash values H1 to H4 of the event data E1 to E4 are provided from the service provider unit SPU to the local audit log unit LALU and are stored in the local audit log unit LALU, see the third step S3. In a fourth step S4, all of the hash values H1 to H4 of the event data E1 to E4 are included in a hash tree and a root hash value RH of the hash tree is provided respectively determined. The determination of the root hash value RH is provided by the local audit log unit LALU. After the determination of the root hash value RH, the root hash value RH is transmitted respectively provided from the local audit log unit LALU to the remote audit log system RALS. The remote audit log system RALS is a system being remote, i.e. exterior, from the service provider system.

In case of a desired audit of the event data, e.g. E1, stored in the local audit log unit LALU, an audit request is received from the local audit log unit LALU or an audit request is transmitted to the local audit unit LALU, see step S6. In this context, the audit request can be provided from the remote audit log system RALS or form another unit being exterior to the service provider system SPS. In a sept step S7 and as a response to the audit request, the local audit log unit LALU provides respectively transmits specific event data and specific node hashes of the hash tree to the remote audit log system RALS or the remote audit log system RALS receives specific event data and specific node hashes of the hash tree from the local audit log unit LALU. Based on the received specific event data and the specific node hashes, a root hash value RHa is determined respectively calculated. The root hash values RHa is determined respectively calculated by the remote audit log system RALS, see step S8. For instance, when the root hash value of the event data E1, as depicted in Fig. 9, should be determined, the local audit log unit LALU provides as a response to the audit request the specific event data E1 to the remote audit log system RALS. Additionally, the local audit log unit LALU provides respectively transmits complementary specific node hashes, in this example H2 and SH2, of the hash tree to the remote audit log system RALS. By receiving E1, H0 and SH2, the remote audit log system RALS is able to determine the root hash RHa. In particular, the remote audit log system RALS is able to determine H1 by hashing the event data E1, is able to determine the child node SH1 by hashing the determined H1 and the received H2, and is able to determine the root hash value RHa by hashing the determined SH1 and the received SH2. In a nineth step S9, the determined root hash value RHa of the remote audit log system RALS is compared with the root hash value RH being determined by the local audit log unit LALU and being provided respectively transmitted from the local audit log unit LALU to the remote audit log system RALS. The remote audit log system RALS optionally provides a comparison result to the service provider unit SPU or to the service provider system SPS, see S10. Further, the remote audit log system RALS optionally provides the comparison result to at least one other unit, see S11.

Alternatively, also depicted in Fig. 8 and already described in Fig. 6, the service provider unit SPU may receive event data E1 to E4 each indicating a sub-step of a process form a plurality, i.e. at least two, of secure transaction units TU.

When the service provider system SPS comprises a plurality of secure transaction units TU, the service provider unit SPU is configured for providing the event data E1 to E4 for each one of the plurality of secure transaction units TU and for providing hash values H1 to H4 for the event data E1 to E4, respectively, for each one of the plurality of secure transaction units TU. Additionally (not depicted), the service provider system SPS may comprise a plurality of service provider units SPU, wherein each service provider unit SPU is configured for providing event data E1 to E4 for one or more secure transaction units TU of the plurality of secure transaction units TU. Further the service provider unit SPU is configured for providing a hash value H1 to H4 for the provided event data E1 to E4 for one or more secure transaction units TU of the plurality of secure transaction units TU. The local audit log unit LALU is configured in this alternative for storing the event data E1 to E4 (received from the one or more service provider units SPU) for each one of the plurality of secure transaction units TU, for storing a hash value H1 to H4 (received from the one or more service provider units SPU) of the event data E1 to E4 of each one of the plurality of secure transaction units TU and including the hash value H1 to H4 of each one of the plurality of secure transaction units TU in the same hash tree or in separate hash trees. The number of hash trees may correspond to the number of secure transaction units TU, but is not limited thereto. The local audit log unit LALU is configured in this alternative for providing a root hash value RH of the same hash tree or a root hash value of each one of the separate hash trees to at the least one remote audit log system RALS.

Fig. 9 shows a hash tree of the second embodiment of the method used in an electronic transaction system of Fig. 8. The hash tree includes the hash value H1 based on the event data E1, the hash value H2 based on the event data E2, the hash value H3 based on the event data E3, and hash value H4 based on the event data E4. The hash values H1 to H4 are the "leaf" hashes of the hash tree. The hash value H1 and the hash value H2 are used for determining the hash value SH1. The hash value H3 and the hash value H4 are used for determining the hash value SH2. The hash value SH1 and SH2 are the "child nodes" of a hash tree. The root hash RH is provided by hashing the hash value SH1 and the hash value SH.

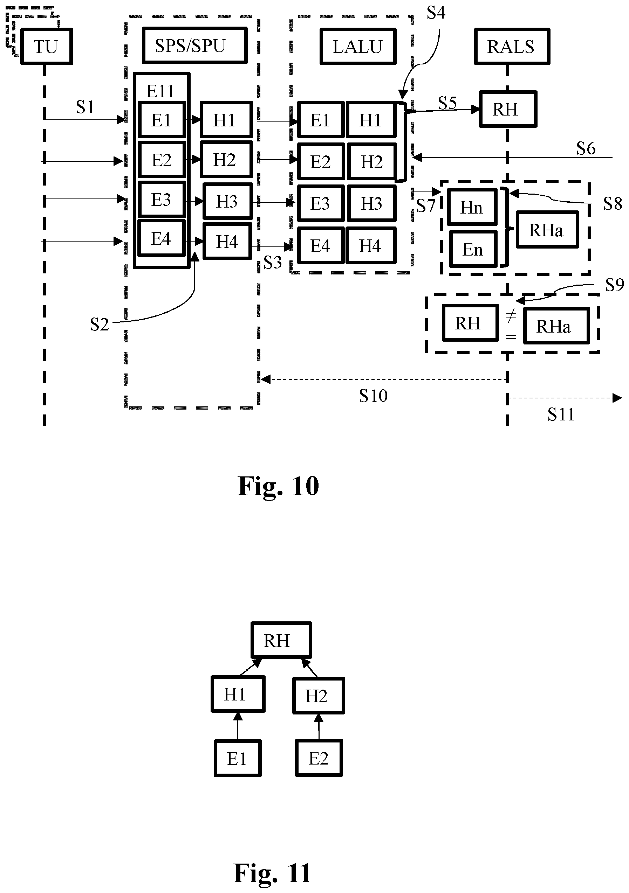

Fig. 10 shows a third embodiment of the method used in an electronic transaction system. The third embodiment of the method used in an electronic transaction system is largely the same as the second embodiment of the method as described above in Figs. 8 and 9. The third embodiment of the method and the second embodiment of the method differs in that in the third embodiment of the method only a selection of the hash values H1 and H2 of the plurality of hash values H1 to H4 stored in the local audit log unit LALU are used for determining the hash value RH-C1. In other words, Fig. 10 depicts a selection and an aggregation of event data and hash values based on a status report automatically logged over time, i.e. in an interval of ten minutes.

Fig. 11 shows a hash tree of the third embodiment of the method used in an electronic transaction system of Fig. 10. The hash tree includes the hash value H1 based on the event data E1 and the hash value H2 based on the event data E2. The hash values H1 and H2 are the "leaf" hashes of the hash tree. The root hash RH is provided by hashing the hash value H1 and the hash value H2.

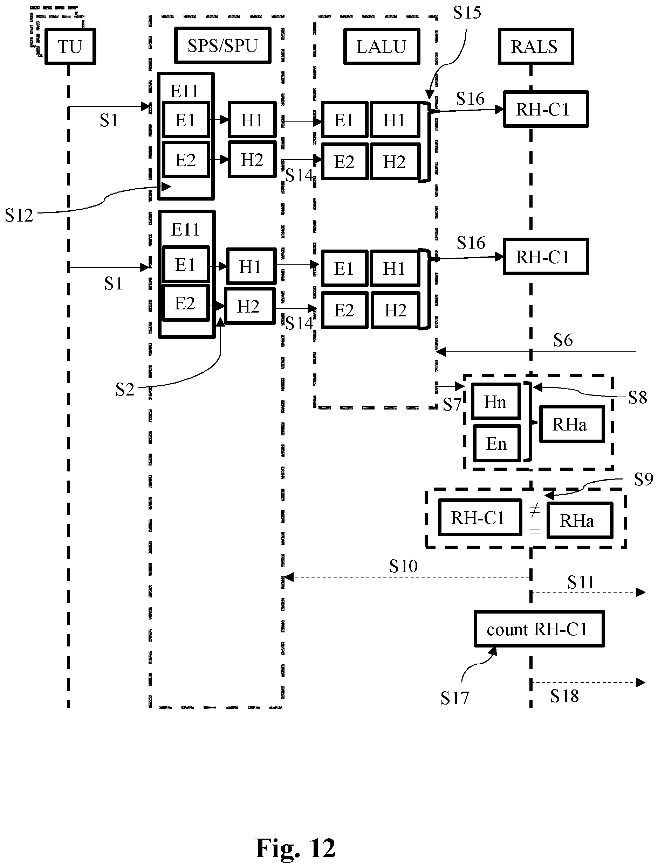

Fig. 12 shows a fourth embodiment of the method used in an electronic transaction system. In the fourth embodiment of the method used in an electronic transaction system, the service provider unit SPU receives over time a plurality of data. The received data are both classified by the service provider unit SPU in the same event data class E11 of a plurality of different event data classes. In this context, both the secure transaction unit TU and the local audit log unit LALU are not included in the service provider unit SPU. In a first step S1, the service provider unit SPU receives event data/data form the one secure transaction unit TU. The data are classified by the service provider unit SPU to be in the same event data class E11, see step S12. The data each includes the event data E1 and E2 indicating two sub-steps of a process. The event data E1 and E2 are hashed such that a hash values H1 of the event data E1 and a hash value H2 of the event data H2 are provided in a second step S2. The hashing of the event data E1 and E2 are provided by the service provider unit SPU. The event data E1 and E2 and the hash values H1 and H2 are provided from the service provider unit SPU to the local audit log unit LALU and are stored in the local audit log unit LALU, see third step S3. In a fourth step S4, the hash values H1 and H2 are included in a hash tree and a class root hash value RH-C1 of the hash tree is provided respectively determined. The above presented proceeding is repeated for each data being classified as to belong to the event data class E11. In case the data are classified in another event data class, the above presented proceeding is executed for this other event data class. The classification is provided based on the type, e.g. token transaction, of the electronic transaction. The determination of the class root hash value RH-C1 is provided by the local audit log unit LALU. After the determination of the class root hash value RH-C1, the class root hash value RH-C1 is transmitted respectively provided from the local audit log unit LALU to the remote audit log system RALS. The remote audit log system RALS is a system being remote, i.e. exterior, from the service provider system.

In case of a desired audit of the event data, e.g. E1, stored in the local audit log unit LALU, an audit request is received from the local audit log unit LALU or an audit request is transmitted to the local audit unit LALU, see step S6. In this context, the audit request can be provided from the remote audit log system RALS or form another unit being exterior to the service provider system SPS. In a sept step S7 and as a response to the audit request, the local audit log unit LALU provides respectively transmits specific event data and specific node hashes of the hash tree to the remote audit log system RALS or the remote audit log system RALS receives specific event data and specific node hashes of the hash tree from the local audit log unit LALU. Based on the received specific event data and the specific node hashes, a root hash value RHa is determined respectively calculated. The root hash values RHa is determined respectively calculated by the remote audit log system RALS, see step S8. In a nineth step S9, the determined root hash value RHa of the remote audit log system RALS is compared with the root hash value RH-C1 being determined by the local audit log unit LALU and being provided respectively transmitted from the local audit log unit LALU to the remote audit log system RALS. The remote audit log system RALS optionally provides a comparison result to the service provider unit SPU or to the service provider system SPS, see S10. Further, the remote audit log system RALS optionally provides the comparison result to at least one other unit, see S11.

Additionally, the method as depicted in Fig. 12 is configured for counting a number of the receiving of the class root hash value in the remote audit log system RALS, see step S17. The counting is provided by a counting unit configured for identifying the number of entries of class root hash values in the remote audit log system RALS.

Additionally, the method as depicted in Fig. 12 is configured for providing the counted number of the receiving the class hash value to at last one other unit, see step S18.

Alternatively, the fourth embodiment of the method is also configured to receive the event data from a plurality of secure transaction units TU etc. as described in the first to third embodiments of the method.

### REFERENCE SIGNS

- SPS: Service provider system
- SPU: Service provider unit
- TU: Secure transaction unit
- TS: Electronic transaction system
- LALU: Local audit log unit
- RALS: Remote audit log system
- 101: storage unit
- 102: including unit
- 103: first providing unit
- 104: request receiving unit
- 105: second providing unit
- 200: classification unit
- 300: result receiving unit
- 401: first receiving unit
- 402: storage unit
- 403: second receiving unit
- 404: determination unit
- 405: comparison unit
- 406: result providing unit
- 407: comparison result providing unit
- 408: request providing unit
- 409: counting unit
- 410: counting result providing unit
- S1: Step 1
- S2: Step 2
- S3: Step 3
- S4: Step 4
- S5: Step 5
- S6: Step 6
- S7: Step 7
- S8: Step 8
- S9: Step 9
- S10: Step 10
- S11: Step 11
- S12: Step 12
- S13: Step 13
- S14: Step 14
- S15: Step 15
- S16: Step 16
- S17: Step 17
- S18: Step 18
- E1 to E4: Event data
- H1 to H4: Hash value
- RH: Root hash value
- RHa: Root hash value
- RH-C1: Root hash value

## Claims

1. A service provider system (SPS) used in an electronic transaction system (TS), the service provider system (SPS) comprising:
a service provider unit (SPU) configured to manage at least one secure transaction unit (TU) and
a local audit log unit (LALU);
wherein the service provider unit (SPU) is configured for providing event data indicating at least one event related to the service provider unit (SPU) and/or the at least one secure transaction unit (TU);
wherein the local audit log unit (LALU) is configured for:
- storing the event data;
- storing hash values of the event data as hashed event data and including the hashed event data in a hash tree; and
- providing a root hash value of the hash tree to at least one remote audit log system (RALS) located remote from the service provider system (SPS).

2. The service provider system (SPS) according to claim 1, wherein the at least one secure transaction unit (TU) and/or the local audit log unit (LALU) are located within the service provider unit (SPU).

3. The service provider system (SPS) according to any one of the preceding claims, wherein the local audit log unit (LALU) is configured for hashing the event data to generate the hash values of the event data.

4. The service provider system (SPS) according to any one of the preceding claims, wherein the at least one event is a result of at least one completed process or is a result of at least one sub-step of a process including the service provider unit (SPU),
wherein the process includes an exchange process, a transaction process, in particular a token transaction, an issuing process, a deleting process, and/or an execution process.

5. The service provider system (SPS) according to any one of the preceding claims, wherein the at least one event is a status report automatically logged over time, in particular in predefined intervals.

6. The service provider system (SPS) according to any one of the preceding claims, wherein the local audit log unit (LALU) comprises:
at least one storage unit (101) for storing the event data and the hashed event data;
at least one including unit (102) configured for including the hashed event data in the hash tree; and
a first providing unit (103) configured for providing the root hash value of the hash tree to the at least one remote audit log system (RALS).

7. The service provider system (SPS) according to any one of the preceding claims, wherein the local audit log unit (LALU) further comprises:
a request receiving unit (104) configured for receiving an audit request, the audit request requesting specific event data and including the root hash value;
a second providing unit (105) configured for providing only the specific event data as requested and specific node hashes from the hash tree related to the root hash value to the remote audit log system (RALS).

8. The service provider system (SPS) according to any one of the preceding claims, wherein the service provider unit (SPU) further comprises:
a classification unit (200) configured for classifying the event data into at least two event data classes; and/or
a result receiving unit (300) configured for receiving a comparison result from the remote audit log system (RALS).

9. The service provider system (SPS) according to any one of the preceding claims, wherein, when the service provider system (SPS) comprises a plurality of secure transaction units (TU), the service provider unit (SPU) is configured for providing event data for each one of the plurality of secure transaction units (TU); wherein the local audit log unit (LALU) is configured for:
storing the event data for each one of the plurality of secure transaction units (TU);
storing a hash value for the event data of each one of the plurality of secure transaction units (TU) and including the hashed event data of each one of the plurality of secure transaction units (TU) in the same hash tree or is separate hash trees; and
providing a root hash value of the same hash tree or root hash values of each one of the separate hash trees to at least one remote audit log system (RALS) located remote from the service provider system (SPS).

10. The service provider system (SPS) according to any one of the preceding claims,
wherein, when the at least one event is a plurality of sub-steps of a process, the service provider unit (SPU) is configured for providing event data for each one of the sub-steps of the plurality of sub-steps;
wherein the local audit log unit (LALU) is configured for
storing the event data for each one of the plurality of sub-steps;
storing a hash value for the event data of each one of the plurality of sub-steps and including the hashed event data of each one of the plurality of sub-steps in the same hash tree or in separate hash trees; and
providing a root hash value of the same hash tree or the root hash values of each one of the separate hash trees to at least one remote audit log system (RALS) located remote from the service provider system (SPS).

11. The service provider system (SPS) according to any one of the preceding claims,
wherein, when the at least one event is a plurality of sub-steps of a process, the service provider unit (SPU) is configured for providing event data for a number of sub-steps less than the plurality of sub-steps;
wherein the local audit log unit (LALU) is configured for:
storing the event data for a number of sub-steps less than the plurality of sub-steps;
storing a hash value for a number of sub-steps less than the plurality of sub-steps and including the hashed event data for a number of sub-steps less than the plurality of sub-steps in the same hash tree or in separate hash trees; and
providing a root hash value of the same hash tree or the root hash values of each one of the separate hash trees to at least one remote audit log system (RALS) located remote from the service provider system (SPS).

12. A remote audit log system (RALS) comprising:
a first receiving unit (401) configured for receiving at least one root hash value from the service provider system (SPS);
a storage unit (402) configured for storing the received at least one root hash value;
a second receiving unit (403) configured for receiving specific event data and specific node hashes of the hash tree;
a determination unit (404) configured for determining a root hash value based on the received specific event data and the specific node hashes of the hash tree; and
a comparison unit (405) configured for comparing the determined root hash value with the received root hash value from the service provider system (SPS).

13. The remote audit log system (RALS) according to claim 9, further comprising:
a result providing unit (406) configured for providing a comparison result to the service provider system (SPS);
a comparison result providing unit (407) configured for providing a comparison result to at least one other unit; and/or
a request providing unit (408) configured for providing an audit request to the local audit log unit (LALU), wherein the audit request requests specific event data and the specific node hashes of the hash tree.

14. The remote audit log system (RALS) according to claims 9 and 10, further comprising:
a counting unit (409) configured for counting the receiving of a root hash value from the service provider system (SPS); and
a counting result providing unit (410) configured for providing the result of the counting to at least one other unit.

15. An electronic transaction system (TS) comprising:
at least one service provider system (SPS) according to claims 1 to 8; and
at least one remote audit log system (RALS) according to claims 9 to 11.

16. Method used in an electronic transaction system (TS), the method comprising:
providing (S1) event data indicating at least one event by the service provided unit (SPU) of the service provider system (SPS);
providing (S2) hashed event data by hashing the received event data by the service provider unit (SPU) of the service provider system (SPS);
storing (S3) the received event data and the hashed event data in the local audit log unit (LALU);
including (S4) the hashed event data in a hash tree and providing a root hash value of the hash tree by the local audit log unit (LALU);
providing (S5) the root hash value from the local audit log unit (LALU) to the remote audit log system (RALS).

17. The method according to claim 16, further comprising:
providing (S6) an audit request to the local audit log unit (LALU);
receiving (S7) by the remote audit log system (RALS) specific event data and specific node hashes of the hash tree requested in the audit request from the local audit log unit (LALU);
determining (S8) a root hash value based on the received specific event data and specific node hashes by the remote audit log system (RALS); and
comparing (S9) the determined root hash value of the remote audit log system (RALS) with the received root hash value of the local audit log unit (LALU).

18. The method according to any one of the claims 16 or 17, further comprising:
providing (S10) a comparison result from the remote audit log system (RALS) to the service provider system (SPS); and/or
providing (S11) a comparison result from the remote audit log system (RALS) to at least one other unit.

19. The method according to any one of the claims 16 to 18, further comprising:
classifying (S12) the event data into at least two event data classes;
providing (S13) hashed class event data by hashing at least one of the at least two event data classes by the service provider unit (SPU) of the service provider system (SPS);
storing (S14) the received event data and the hashed class event data in the local audit log unit (LALU);
including (S15) the hashed class event data in a hash tree and providing a class root hash value of the hashed class event data by the local audit log unit (LALU);
receiving (S16) the class root hash value by the remote audit log system (RALS);
counting (S17) a number of receiving the class root hash value; and
providing (S18) the counted number of the receiving the class hash value to at last one other unit.
